# EUROPEAN PATENT SPECIFICATION

(11) **EP 2 253 035 B1**
(45) Date of publication and mention of the grant of the patent: **10.04.2013**
(21) Application number: 09718481.6
(22) Date of filing: 06.03.2009
(51) Int. Cl.: H01M 2/04, H01M 2/30

(54) **COVER FOR LEAD ACID BATTERIES**
ABDECKUNG FÜR BLEIBATTERIEN
COUVERCLE POUR BATTERIES À ACIDE DE PLOMB

(30) Priority: 06.03.2008 EP 08152394
(43) Date of publication of application: 24.11.2010
(73) Proprietor: Accumalux S.A., 1899 Kockelscheuer (LU)
(72) Inventor: LANGE, Wolfgang, L-5823 Fentange (LU)
(74) Representative: Office Freylinger
(86) International application number: PCT/EP2009/052671
(87) International publication number: WO 2009/109658

(56) References cited:
- GB-A- 1 484 835
- JP-A- 2002 313 315

## Description

### Technical field

The present invention relates to a cover for lead acid battery and lead-acid batteries comprising such a cover as well as to the bushings themselves, in particular the invention relates to lead acid batteries having an injection moulded cover with an enhanced seal between the bushing and the cover.

### Background Art

An electric storage battery such as a lead acid storage battery typically comprises a battery case with a rectangular open top case having a plurality of intercell partition walls. A plurality of battery plates are respectively received between the plurality of intercell partition walls for forming a plurality of battery cell. The plurality of battery plates between the plurality of partition intercell walls are interconnected by intercell connectors extending through the intercell partition walls. The intercell connectors connect the plurality of battery plates between the plurality of partition intercell walls in an electrical series configuration.

A positive and negative battery post extends upwardly from the battery plates disposed in the battery cells at opposed ends of the battery case for providing a positive pole at one end of the battery case and a negative pole on the other end of the battery case. The positive and negative battery posts extend above the level of the battery case.

A battery case cover including a positive and negative battery bushing is secured to the top of the battery case cover. When the battery case cover is placed over the battery case, the positive and negative battery posts are received within the positive and negative bushings of the battery case cover. The battery case cover is sealed to the battery case as should be well known to those skilled in the art.

The positive and negative battery post and the positive and negative battery bushings are made of a lead material in a lead acid battery. Various methods for electrically connecting the positive and negative battery posts to the positive and negative battery bushings secured to the battery case cover are known in the art. The bushings are bonded to the terminal posts by heating the terminal posts and bushings above the melting point of the bushings but below the melting point of the posts.

Lead-acid cells and batteries include sulphuric acid as an electrolyte. This electrolyte readily wets the surfaces of internal lead components of the battery or cell. Because sulphuric acid has a very low surface tension, it can readily pass through small orifices and cracks. Without an effective seal between the interior of the battery or cell and the ambient atmosphere, sulphuric acid would readily migrate out to the environment, potentially causing corrosion of the terminals or exterior equipment.

Leakage is thus of particular concern at the terminals of the battery or cell. In those cells and batteries, leakage of sulphuric acid may occur in particular at the interface between the bushing and the nonconductive plastic wall if this interface is not properly sealed.

Inasmuch as the conductive bushing and nonconductive substrate are of dissimilar materials, it can be difficult to form an effective seal between the connector and partition wall. It is particularly difficult to form an effective seal between a conductive terminal bushing, which typically is made of lead (or a lead alloy), to a nonconductive substrate, which typically is made of an organic polymer, such as polypropylene.

Sealing between the bushing and the cover is typically accomplished by moulding an annular lead bushing into the cover at each post location. Each bushing surrounds its post and electrical contact is accomplished by fusing each post to its bushing. Today, sealing with moulded-in lead bushings is the most widely used system.

In the prior art, numerous solutions have been proposed to enhance the sealing between the terminal bushing and the cover.

Traditionally, the bushing comprises a multitude of exterior annular grooves also called acid rings in its lower portion which is set in the plastic battery cover of the battery to firmly secure the bushing into the cover and to enhance sealing between the cover and the bushing. The exterior annular grooves increase the electrolyte creepage path out of the battery and thus minimize electrolyte leakage.

In order to further enhance the sealing between the bushing and the cover, US 3,992,224 proposes to powder-coat the lead bushings with a polyolefin or a polyolefin-polycarbonate blend to achieve a better contact between the exterior annular grooves of the lead bushing and the cover material.

US 5,709,967 discloses a curable sealant composition for coating a conductive bushing for a lead-acid battery cell or battery to provide a better sealing between the bushing and the cover.

WO90/10954 discloses a battery cell cover including a device for sealing a lead post through the cover, which does not require that the lead bushing be moulded to the cover. The device is in the form of stiff plastic or elastomeric collar, which is adhesively secured to and surrounds the lead post.

A bushing with a separate terminal also called L-type bushing or Ford Lug type bushing comprising a flat tang with a hole through it is described in JP2002-3133315. A bolt through the hole in the flat tang connects the terminal to the cable lug for the electrical connection. JP2002-3133315 provides a lead acid battery, which hardly leaks from the part between the lid and the bushing part. The lower part of the bushing is covered by a film of polypropylene.

A principal drawback in the use of sealants is the higher costs of the sealant material and the additional manufacturing steps required when mounting the battery.

### Technical problem

It is an object of the present invention to provide a cover of a lead acid battery, which diminishes the sulphuric acid leakage between a standard type bushing and the cover without the need an extra sealant material.

### General Description of the Invention

To achieve this object, the present invention proposes a cover made of plastic material for a lead acid battery comprising at least one bushing with an annular body having an upper portion and a lower portion, said bushing having an outer surface and an inner surface, the lower portion of the bushing comprising a device on its outer surface for mechanically fixing said bushing to the cover, wherein the outer and the inner surface of the lower portion of the bushing are embedded inside the cover material.

Lead-acid batteries are made with several different styles for the posts or bushings that connect to the cables. The present invention concerns preferably a so called "standard type bushing" with a "round" post familiar on starting batteries in gas-powered cars where the cable lug fits around the terminal. The standard type bushings do not comprise a flat tang as the L-type or Ford Lug Type bushings.

In the traditional bushings, the bottom surface and the inner side of the bushing are "naked" i.e. exposed to the acid contained in the battery. The acid may therefore creep upwards between the outer surface of the bushing and the cover material through a labyrinth made of a succession of exterior annular grooves (acid rings) before coming into contact with the exterior. This succession of grooves makes the bushing rather "long" and rather heavy.

In the present invention however, the lower portion of the bushing is completely immerged or embedded in the cover material. The plastic material of the cover does not only cover the outer surface of the bushing but it goes around the bottom of the lower portion of the bushing and covers the inner side of the lower portion of the bushing as well. Consequently, in the present invention, the lower portion of the bushing is not exposed to the acid contained in the battery at all. The creepage path or labyrinth is thus considerably lengthened and more complex.

An advantage of the present invention is that the bushing can thus be "shorter" (with fewer grooves) and thus lighter i.e. requiring less lead. It is estimated that the bushings according to the invention require up to 30 % preferably up to 35% less lead than the traditional bushings. The cover of the present invention is thus less expensive to manufacture while it diminishes the risk of acid leakage considerably.

A major difference between the L-type bushings described in JP2002-3133315 and the bushings of the present invention is the absence of a L-type terminal. Indeed, in the L-type bushings, the anchorage of the bushing in the cover is made not only by the immerged part of the bushing part but also with the bottom part of the L-shaped terminal. Such L-type bushings are thus more solidly anchored in the cover and a high torque must be applied before the bushing is torn out of the cover. This is certainly not the case with standard type bushings unless they penetrate up to a certain depth into the cover. The standard type bushings therefore have to have a certain length.

A further important difference between the L-type bushing and the standard type bushing is the way the post of the battery cells is attached to the bushing. In the L-type bushing, the post emerging from the battery cell is fixed to the bushing at its top only as described for example in JP2002-3133315. An empty space or gap is arranged between the post and the bushing part of the terminal and the electrical contact is exclusively made at the top of the bushing and the post. The sidewalls of the post are not connected to the inner sidewalls of the bushing part of the L-type bushings.

In standard type bushings however such a gap is avoided as described i.e. in US 5,478,981. This US patent describes the manufacturing of a typical lead acid storage battery as well as the importance of having a secure bonding of the post and the bushing over a vertical distance. Such a welding over a vertical distance would not possible in L-type bushings because the bushing part hardly rises above the level of the cover.

It is well known in the art that particular attention has to be paid during the welding of the post to the bushing in order not to damage the plastic material of the cover of the battery because the melting point of the lead alloys are at about 320-350°C whereas the melting point of the polypropylene resin use to manufacture the cover is about 160°C.

A further advantage of the present invention is that the lead of the bushing is less exposed to the acid contained in the battery and is thus less exposed to corrosion. Indeed, the outer surface, the bottom surface and the inner side of the lower portion of the bushing are covered by the plastic material of the cover and are thus not exposed to the acid contained in the battery.

In a preferred embodiment, the cover material covers the lower portion of the bushing on its inner surface at least up to the same height as on its outer surface.

Advantageously, the cover material covers the lower portion of the bushing on its inner surface higher than on its outer surface. In other words, the cover material on the inner surface is above the level of the cover material on the outer surface.

In a further embodiment, the inner surface of the upper portion is at least partially covered with cover material. This further lengthens the acid creepage path.

The upper portion of said bushing has an inner diameter, which is smaller than the inner diameter of the lower portion to allow room for the cover material between the post and the bushing. The inner diameter of the upper portion of said bushing is preferably between 0.8 and 0.95 times the inner diameter of the lower portion. The inner diameter as used herein is the inner diameter at half the height of the portion. The inner surfaces of the bushing are preferably cone shaped, the shape of the cone of the upper and lower portion may be different or may be the same, however their inner diameter at half height is different in the proportions described above.

Preferably, a ridge or a step or a shoulder on the inner surface separates the upper form the lower portions.

According to a further embodiment, the bushing comprises two or more ribs on the inner surface of its lower portion.

According to a further embodiment, the bushing comprises two or more grooves on the inner surface of its lower portion. These ribs and/or grooves preferably extend vertically over at least 20% of the height of the lower portion of the bushing. They occupy preferably at least 25% of the inner surface of the lower portion. Preferably they have a depth respectively a height of between 5 and 35 % and more preferably between 10 and 30% and most preferably between 12 and 25% of the thickness of the lower portion of the bushing.

The grooves and/or the ribs preferably form a sort of tongue and groove connection between the bushing and the cover material.

The stability of the structure is thus not assured by the lead alone anymore but the stability of the structure is increased because of the cover material.

The device for mechanically fixing said bushing to the cover comprises preferably at least an annular ridge and at least one annular groove respectively any other profile perpendicular to the axis of the bushing. The profil may for example have a form similar to a toothed wheel.

According to another aspect, there is disclosed a battery comprising a cover as described herein above.

According to yet another aspect, there is disclosed a method for manufacturing cover for a lead acid battery as described herein above, wherein said cover is injection melded to the bushing.

Finally, a bushing for a lead acid battery with an annular body, having an upper portion and a lower portion is disclosed. Said bushing comprises an outer surface and an inner surface, the lower portion of the bushing comprising a device on its outer surface for mechanically fixing said bushing to a cover of a lead acid battery. The inner surface of the lower portion of the bushing comprises a annular recess for receiving cover material.

The recess for receiving the cover material comprises a portion having a larger inner diameter than the upper portion, the diameter of the upper portion being adapted to the diameter of the post of the battery, where as the diameter of the lower portion is adapted to receive cover material between the post and the bushing. The difference between the two diameters is preferably between 0.8 mm and 3 mm.

### Brief Description of the Drawings

A preferred embodiment of the invention will now be described, by way of example, with reference to the accompanying drawings in which:
Fig. 1: is a cross-section view of an illustrative prior art bushing for use in a lead acid battery;
Fig. 2: is side elevation view of a battery using a bushing according to the present invention
Fig. 3: is a cross-section view of an illustrative embodiment of a bushing of the present invention for use in a lead acid battery;
Fig. 4: is a cross-section view of a further illustrative embodiment of a bushing of the present invention for use in a lead acid battery
Fig. 5: is a partial enlargement of Fig. 2.
Fig. 6a: is a cross-section view of a further illustrative embodiment of a bushing of the present invention for use in a lead acid battery;
Fig. 6b and 6c: are perspective views of the bushing of Fig. 6a
Fig. 6d: is a cross-section view of the bushing of Figs 6a, 6b and 6c in the cover of a battery
Fig. 7a: is a cross-section view of a further illustrative embodiment of a bushing of the present invention for use in a lead acid batter
Fig. 7b and 7c: are perspective views of the bushing of Fig. 7a
Fig. 8a: is a cross-section view of a further illustrative embodiment of a bushing of the present invention for use in a lead acid batter
Fig. 8b and 8c: are perspective views of the bushing of Fig. 8a

Further details and advantages of the present invention will be apparent from the following detailed description.

### Detailed Description of the Drawings

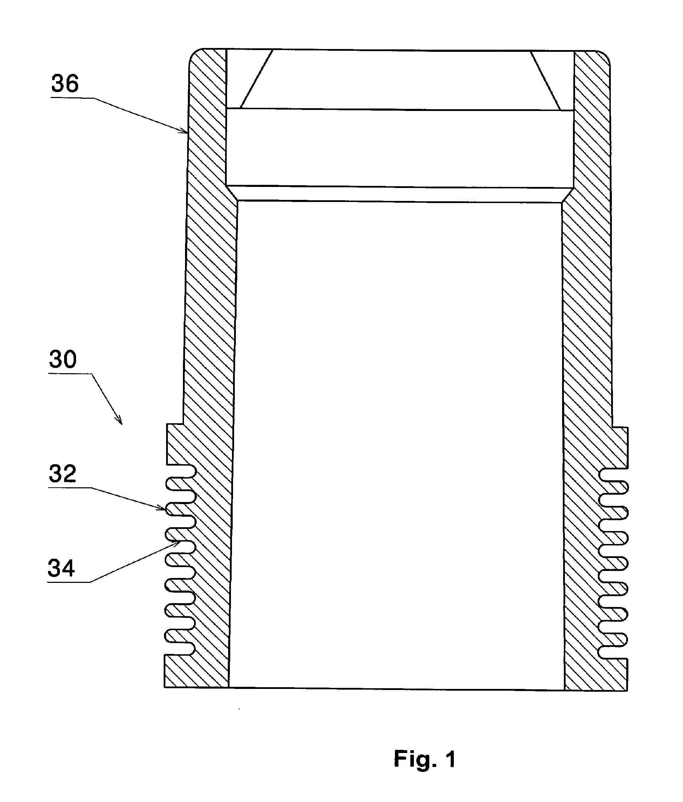

As is shown in FIG. 1 taken from US Patent N° 5,924,471, a prior art bushing 30 comprises an annular body having a lower portion 32 having a series of circumferential acid rings 34 about this lower portion 32. Such acid rings 34 are commonly utilized to enhance sealing between a plastic battery cover and the bushing, as well as to increase the electrolyte creepage path out of the battery so as to minimize electrolyte leakage. The top section 36 of the bushing 30 is a critical area of the bushing 30 since this is the part, in this configuration, which is fused to a post in the terminal cell to form the terminal.

The lead alloys used to form the bushing may be any of those conventionally used for this purpose. Various lead-based alloys with alloying elements such as tin and antimony, for example, are known and may be employed.

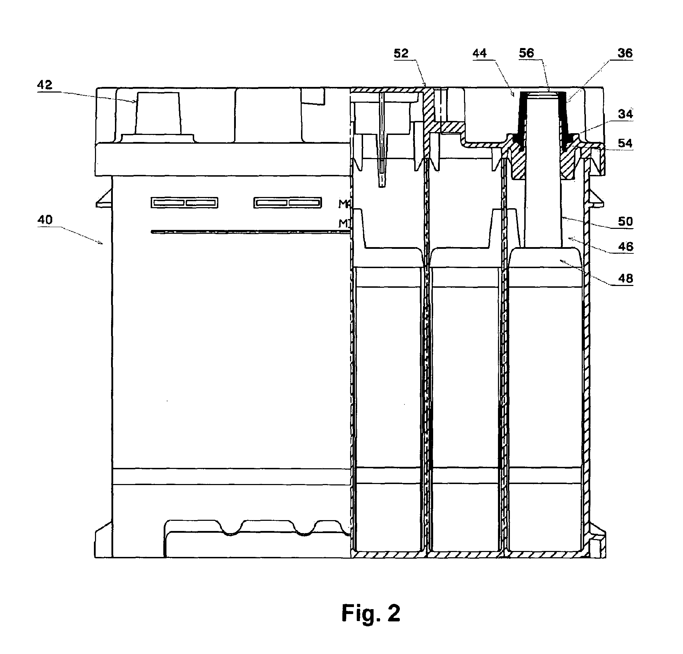

FIG. 2 shows a battery 40 having a positive terminal 42 and a negative terminal shown generally at 44. The negative plates in the terminal cell 46 are connected to the strap 48 and the upstanding post 50.

The bushing 30 is moulded into the cover 52 with a portion extending into the terminal cell 46 and an acid ring 34 being moulded into the cover barrel 54. Upstanding portion 36 of bushing 30 receives post 50.

To form the terminal 44, the upper portion 36 of the bushing 30 is fused to the top part 56 of the post 50. This is accomplished by induction heating or by other means, which cause the respective surfaces to fuse together. Typically, the depth of the fusion goes down to from about 0.5 to about 1 cm.

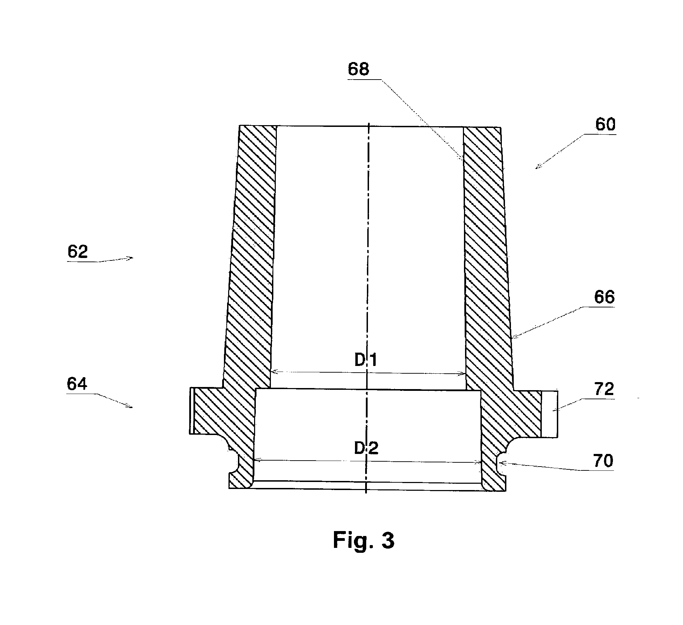

Fig. 3 shows a cross-section view of a first illustrative embodiment of a bushing of the present invention for use in a lead acid battery. The bushing 60 comprises an upper portion 62 and a lower portion 64; an outer surface 66 and an inner surface 68. On the outer surface of the lower portion, the bushing comprises an annular groove or acid ring 70 and a device 72 for mechanically fixing said bushing to the cover. This device is preferably in the form of a toothed wheel wherein the teeth are perpendicular to the axes of the bushing.

The upper portion of said bushing has an inner diameter D1, which is adapted in size so as to receive the post. The inner diameter D2 of the lower portion of the bushing is larger than the inner diameter of the upper portion, so as to receive cover material between the inner surface of the bushing and the outer surface of the post.

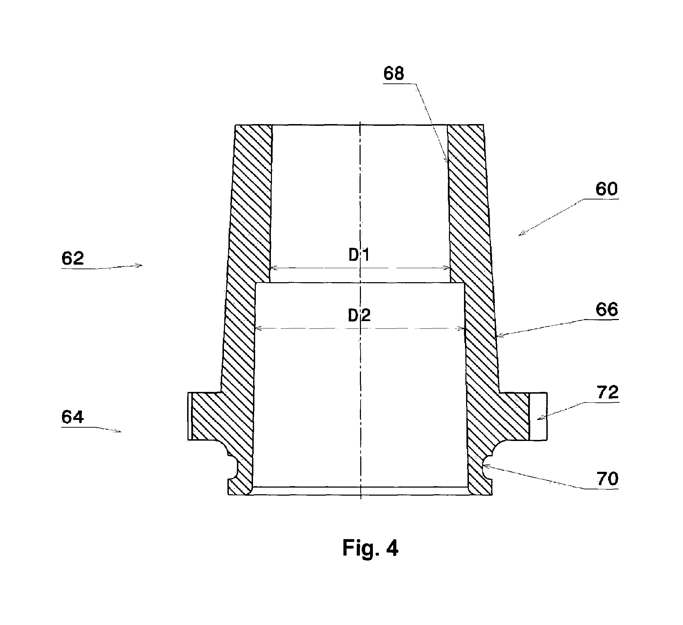

In this particular embodiment, the cover material covers the lower portion up to substantially the same height on the inside as on the outside. In another embodiment, as shown in Fig. 4, the cover material reaches up higher on the inside surface than on the outside surface of the lower portion of the bushing.

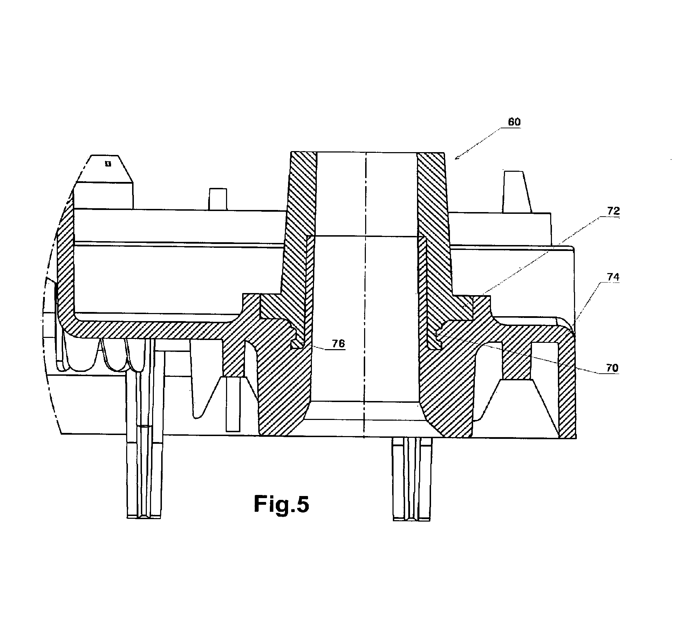

As can be seen in more detail on Fig. 5, the cover material 74 goes around the bottom 76 of the bushing 60 and completely envelops and covers the lower part of the bushing, so that neither the inside surface, nor the outside surface nor the bottom surface of the bushing comes into contact with the acid contained in the battery. This minimizes the corrosion of the bushing due the acid contained in the battery. The bushing is solidly anchored in the cover and is maintained

Furthermore, the fact that the bottom 76 of the lower portion of the bushing is completely immerged in the cover material makes the creepage path of the sulphuric acid much longer and more complex as compared to traditional bushings as e.g. represented on Fig. 1. Indeed, in the bushing 60 according to the invention, the sulphuric acid must first rise upwards between the cover material and the post and then travel downward between the cover material and the bushing and then around the bottom surface before having to travel upward again between the outer surface of the bushing and the cover material.

The creepage path of the sulphuric acid is thus longer and more complex in the bushings according to the invention than in traditional bushings wherein the creepage path is exclusively on the outer surface of the bushing. In order to make the creepage path longer in a traditional bushing, one has to add further acid rings and thus make the bushing longer and thus more expensive.

The fact that the cover material also covers the inner side of the bushing provides a better and more solid anchorage of the bushing in the cover.

Surprisingly, it has been found that the cover material on the inner side of the bushing does neither melt nor is it damaged during the fusion of the upper part of the post to the upper part of the bushing. This is indeed surprising since the post and the bushing are welded on a length of about 1 cm and are heated to well above 350°C. The lead of the pots and the bushing being a very good heat conductor, it was expected that the cover material on the inner side of the bushing be damaged or melted.

Furthermore, even if the bushings according to the invention are "shorter" i.e. penetrate less deeply in the cover material, a high torque must be applied before the bushing is torn out of the cover. Surprisingly the fact that a small film of cover material is placed on the inside of the bushing raises the torque necessary to be applied to the bushing in order to tear it out of the cover by 150% - 225 % compared to the same bushing without a plastic film.

It should be noted that the cover material on the inner side of the lower portion of the bushing must not be very thick. It has been found that a thickness of between 0.4 mm and 1.5 mm is enough.

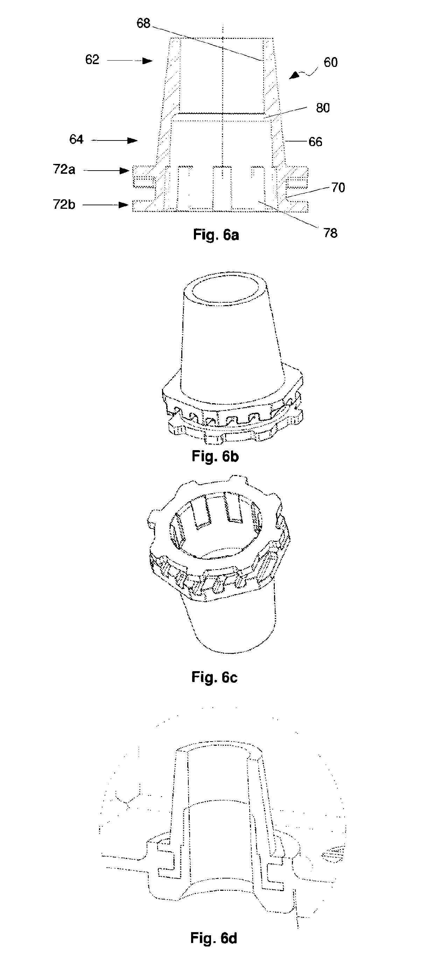

Fig. 6a,b,c & d show a further illustrative embodiment of a bushing for use in a lead acid battery. The bushing 60 comprises an upper portion 62 and a lower portion 64; an outer surface 66 and an inner surface 68. On the outer surface of the lower portion, the bushing comprises an annular groove or acid ring 70 and two devices 72a, 72b for mechanically fixing said bushing to the cover. The lower device 72b is in the form of toothed wheel wherein the teeth are perpendicular to the axes of the bushing. The upper device 72a has a polygonal shape with a series of grooves on its lower side for a better anchorage of the bushing in the cover material of the lead acid battery.

Fig 6d shows an excerpt the battery cover with the bushing solidly anchored therein, The inner surface 68 of the lower part 64 comprises a series of grooves 78 for anchoring the bushing more solidly to the cover and for raising the mechanical stability of the bushing. The cover material is injection-moulded around the bottom of the bushing and filing the ribs or grooves 78.

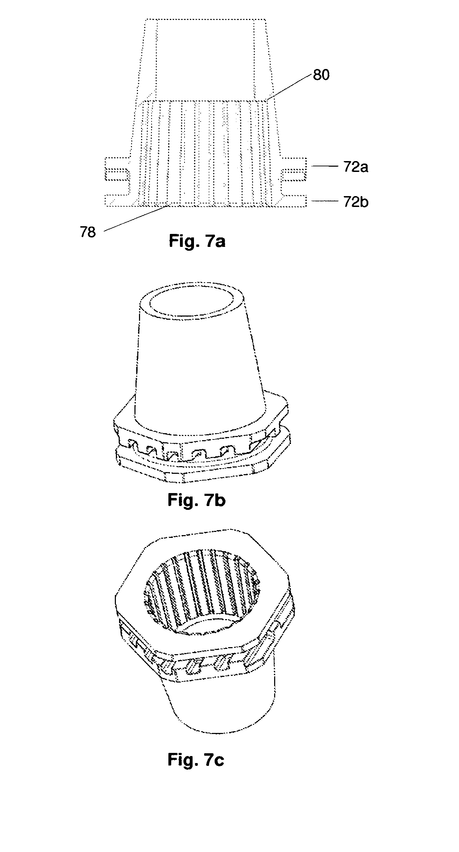

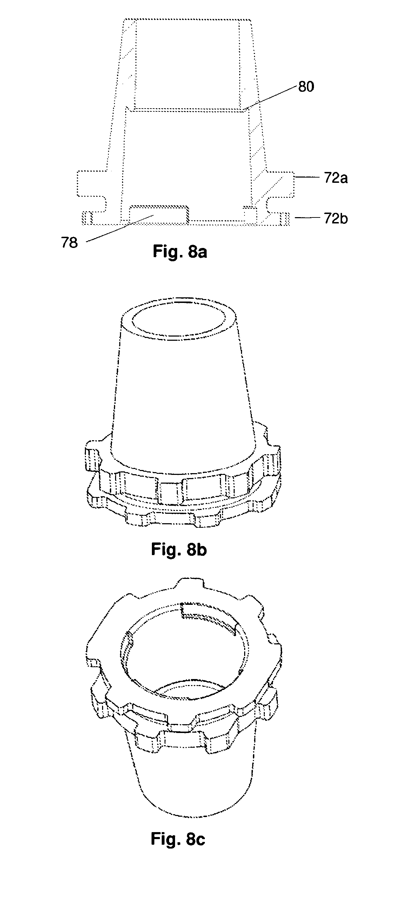

Fig. 7a, 7b, 7c and Fig. 8a, 8b, 8c show further embodiments of a bushing for lead acid batteries. These embodiments differ from each other and from those of Fig 6a, 6b, 6c by the rings or profiles 72a, 72b on the outer side of the lower portion as well as by the configuration and number of grooves 78 on the inner surface of the lower portion. Alternative forms of the ridge 80 between the lower portion and the upper portion can be seen on the inner side of the bushings.

| | |
|---|---|
| **30** | **bushing** |
| **32** | **lower portion** |
| **34** | **acid rings** |
| **36** | **top section** |
| **40** | **battery** |
| **42** | **positive terminal** |
| **44** | **negative terminal** |
| **46** | **terminal cell** |
| **48** | **strap** |
| **50** | **upstanding post** |
| **52** | **cover** |
| **54** | **cover barrel** |
| **56** | **top part** |
| **60** | **bushing** |
| **62** | **upper portion** |
| **64** | **lower portion** |
| **66** | **outer surface** |
| **68** | **inner surface** |
| **70** | **acid ring** |
| **72, 72a, 72b** | **device for mechanically fixing said bushing to the cover** |
| **D1** | **inner diameter of upper portion** |
| **D2** | **inner diameter of lower portion** |
| **74** | **cover material** |
| **76** | **bottom of the bushing** |
| **78** | **Ribs or grooves in the inner surface of the lower part** |
| | |
| | |

## Claims

1. A cover made of plastic material for a lead acid battery, said cover comprising at least one standard type bushing where a cable lug fits around the bushing, said bushing has an annular body having an upper portion and a lower portion, said bushing having an outer surface and an inner surface, the lower portion of the bushing comprising a device on its outer surface for mechanically fixing said bushing to the cover, wherein said device for mechanically fixing said bushing to the cover comprises at least an annular ridge and at least one annular groove and wherein the outer and the inner surface of the lower portion of the bushing are embedded inside the cover material.

2. The cover for a lead acid battery according to claim 1, wherein the bushing comprises two or more ribs or grooves on the inner surface of its lower portion.

3. The cover for a lead acid battery according to claim 1 or 2, wherein the cover material covers the lower portion of the bushing on its inner surface at least up to the same height as on its outer surface.

4. The cover for a lead acid battery as claimed in any of the claims 1 to 3, wherein the cover material covers the lower portion of the bushing on its inner surface higher than on its outer surface.

5. The cover for a lead acid battery as claimed in any of the claims 1 to 4, wherein the inner surface of the upper portion is at least partially covered with cover material.

6. The cover for a lead acid battery as claimed in any of the claims 1 to 5, wherein the upper portion of said bushing has an inner diameter, which is smaller than the inner diameter of the lower portion, the diameter of the upper portion being adapted to the diameter of the post of the battery, where as the diameter of the lower portion is adapted to receive cover material between the post and the bushing.

7. The cover for a lead acid battery as claimed in any of the claims 1 to 6, wherein inner surface of the bushing comprises an annular ridge.

8. A battery comprising a cover as claimed in any of the claims 1 to 7 wherein a post is welded over a length of about 1 cm to the bushing.

9. A method for manufacturing cover for a lead acid battery according to any of the claims 1 to 7, wherein said cover is injection molded to the bushing.

## Patentansprüche

1. Abdeckung aus Kunststoffmaterial für eine Bleibatterie, wobei die Abdeckung mindestens eine Standardbuchse aufweist, wobei ein Kabelschuh um die Buchse passt, wobei die Buchse einen ringförmigen Körper mit einem oberen Abschnitt und einem unteren Abschnitt aufweist, wobei die Buchse eine Außenfläche und eine Innenfläche aufweist, wobei der untere Abschnitt der Buchse an seiner Außenfläche eine Vorrichtung zum mechanischen Befestigen der Buchse an der Abdeckung aufweist, wobei die Vorrichtung zum mechanischen Befestigen der Buchse an der Abdeckung mindestens einen ringförmigen Steg und mindestens eine ringförmige Nut aufweist, und wobei die Außenfläche und die Innenfläche des unteren Abschnitts der Buchse in dem Abdeckungsmaterial eingebettet sind.

2. Abdeckung für eine Bleibatterie nach Anspruch 1, wobei die Buchse auf der Innenfläche ihres unteren Abschnitts zwei oder mehr Rippen oder Nuten umfasst.

3. Abdeckung für eine Bleibatterie nach Anspruch 1 oder 2, wobei das Abdeckungsmaterial den unteren Abschnitt der Buchse auf seiner Innenfläche zumindest bis zur gleichen Höhe abdeckt wie auf seiner Außenfläche.

4. Abdeckung für eine Bleibatterie nach einem der Ansprüche 1 bis 3, wobei das Abdeckungsmaterial den unteren Abschnitt der Buchse auf seiner Innenfläche höher abdeckt als auf seiner Außenfläche.

5. Abdeckung für eine Bleibatterie nach einem der Ansprüche 1 bis 4, wobei die Innenfläche des oberen Abschnitts zumindest teilweise mit Abdeckungsmaterial bedeckt ist.

6. Abdeckung für eine Bleibatterie nach einem der Ansprüche 1 bis 5, wobei der obere Abschnitt der Buchse einen Innendurchmesser aufweist, der kleiner ist als der Innendurchmesser des unteren Abschnitts, wobei der Durchmesser des oberen Abschnitts an den Durchmesser des Stiftes der Batterie angepasst ist, während der Durchmesser des unteren Abschnitts dazu geeignet ist, Abdeckungsmaterial zwischen dem Stift und der Buchse aufzunehmen.

7. Abdeckung für eine Bleibatterie nach einem der Ansprüche 1 bis 6, wobei die Innenfläche der Buchse einen ringförmigen Steg umfasst.

8. Batterie, aufweisend eine Abdeckung nach einem der Ansprüche 1 bis 7, wobei ein Stift über eine Länge von etwa 1 cm an die Buchse geschweißt ist.

9. Verfahren zur Herstellung einer Abdeckung für eine Bleibatterie nach einem der Ansprüche 1 bis 7, wobei die Abdeckung durch Spritzguss an der Buchse angebracht ist.

## Revendications

1. Couvercle en matière plastique pour une batterie au plomb-acide, ledit couvercle comprenant au moins une douille de type standard où une cosse de câble s'adapte autour de la douille, ladite douille a un corps annulaire ayant une partie supérieure et une partie inférieure, ladite douille ayant une surface externe et une surface interne, la partie inférieure de la douille comprenant un dispositif sur sa surface externe permettant de fixer mécaniquement ladite douille au couvercle, dans lequel ledit dispositif permettant de fixer mécaniquement ladite douille au couvercle comprend au moins une arête annulaire et au moins une rainure annulaire et dans lequel les surfaces externe et interne de la partie inférieure de la douille sont incorporées à l'intérieur de la matière du couvercle.

2. Couvercle pour une batterie au plomb-acide selon la revendication 1, dans lequel la douille comprend deux nervures ou rainures ou plus sur la surface interne de sa partie inférieure.

3. Couvercle pour une batterie au plomb-acide selon la revendication 1 ou 2, dans lequel la matière du couvercle recouvre la partie inférieure de la douille sur sa surface interne au moins jusqu'à la même hauteur que sur sa surface externe.

4. Couvercle pour une batterie au plomb-acide selon l'une quelconque des revendications 1 à 3, dans lequel la matière du couvercle recouvre la partie inférieure de la douille sur sa surface interne davantage que sur sa surface externe.

5. Couvercle pour une batterie au plomb-acide selon l'une quelconque des revendications 1 à 4, dans lequel la surface interne de la partie supérieure est au moins partiellement recouverte par la matière du couvercle.

6. Couvercle pour une batterie au plomb-acide selon l'une quelconque des revendications 1 à 5, dans lequel la partie supérieure de ladite douille a un diamètre interne, qui est inférieur au diamètre interne de la partie inférieure, le diamètre de la partie supérieure étant adapté au diamètre de la borne de la batterie, tandis que le diamètre de la partie inférieure est adapté pour recevoir la matière du couvercle entre la borne et la douille.

7. Couvercle pour une batterie au plomb-acide selon l'une quelconque des revendications 1 à 6, dans lequel la surface interne de la douille comprend une arête annulaire.

8. Batterie comprenant un couvercle selon l'une quelconque des revendications 1 à 7, dans laquelle une borne est soudée sur une longueur d'environ 1 cm à la douille.

9. Procédé de fabrication d'un couvercle pour une batterie au plomb-acide selon l'une quelconque des revendications 1 à 7, dans lequel ledit couvercle est moulé par injection à la douille.
